# EUROPÄISCHE PATENTSCHRIFT

(11) **EP 1 491 319 B1**
(45) Veröffentlichungstag und Bekanntmachung des Hinweises auf die Patenterteilung: **02.01.2008**
(21) Anmeldenummer: 03014150.1
(22) Anmeldetag: 24.06.2003
(51) Int. Cl.: B29C 47/88, B29C 47/90

(54) **Verfahren und Vorrichtung zur Blasfolienherstellung**
Method and apparatus for manufacturing blown films
Procédé et dispositif de fabrication de feuilles soufflées

(43) Veröffentlichungstag der Anmeldung: 29.12.2004
(73) Patentinhaber: K Design GmbH, 53639 Königswinter (DE)
(72) Erfinder: Fähling, Gerd, 53773 Hennef (DE); Zimmermann, Richard, 53127 Bonn (DE)
(74) Vertreter: Neumann, Ernst Dieter

(56) Entgegenhaltungen:
- DE-A- 3 920 194
- DE-A- 4 405 463
- DE-A- 10 210 845
- FR-A- 1 523 782
- US-A- 4 473 527
- US-B1- 6 273 699

## Beschreibung

Die Erfindung betrifft ein Verfahren und eine Vorrichtung zum Kühlen eines Folienschlauches bei der Blasfolienherstellung, bei der der Folienschlauch nach dem Austritt aus der Ringdüse eines Blaskopfes von außen im wesentlichen ringförmig entweder radial oder wandparallel mit Kühlgas angeblasen wird. Als Kühlgas wird üblicherweise Kühlluft verwendet. In bestimmten Anwendungsfällen ist jedoch auch die Verwendung von Inertgas möglich. Das Kühlgas kann aus einem Kühlgasring in mehreren Ebenen und in unterschiedlich großen Volumenströmen austreten, wobei ein fest eingestellter Kühlgasstrom und ein regelbarer Kühlgasstrom kombiniert werden können. Ein Verfahren und eine Vorrichtung der genannten Art sind beispielsweise in der DE 100 29 175 A1 der Anmelderin beschrieben.

Bei der Blasfolienherstellung bzw. der Blasfolienextrusion wird thermoplastisches Material über einen Extruder in einen Blaskopf gepreßt, aus dessen Ringdüse oder Ringkanal ein Folienschlauch austritt, der nach oben abgezogen wird. Der heiße Folienschlauch ist einem inneren Überdruck ausgesetzt und wird unmittelbar nach dem Austritt aus der Ringdüse von außen und eventuell auch von innen im wesentlichen ringförmig mit Kühlgas angeblasen und dadurch abgekühlt. Vom Austritt aus der Ringdüse ausgehend tritt nach einer Phase der Erweiterung der Folienschlauches ein weitgehendes Erstarren des thermoplastischen Materials ein, wonach der Folienschlauch im wesentlichen seinen Durchmesser beibehält. Der Ort des Erstarrens wird als Einfriergrenze bezeichnet. Nach dem Erstarren wird der Folienschlauch in Längsrichtung über einen Kalibrierkorb und eine Flachlegevorrichtung geführt und als Flachschlauch von einem Abzugswerk abgequetscht und abgezogen. Der Kalibrierkorb liegt bereits oberhalb der Einfriergrenze. Der Durchmesser des Folienschlauches und damit die spätere Folienbreite ist veränderbar und wird durch den inneren Überdruck im Folienschlauch sowie über die Einstellung des einstellbaren Kalibrierkorbes variiert.

Aus der US 6273 699 B1 ist eine Vorrichtung zur Herstellung von Blasfolienschläuchen bekannt, bei der in üblicher Weise unmittelbar oberhalb der Ringdüse des Blaskopfes ein Kühlgasring angeordnet ist, der einen Venturieffekt erzeugt, um ein Aufweiten des Folienschlauches zu bewirken.

Oberhalb des Kühlgasringes befindet sich in einigem Abstand eine Vorrichtung zum Konditionieren des Folienschlauches, die mehrere geschlossene ringförmige Sektionen längs des Folienschlauches aufweist.; die Sektionen umfassen jeweils einen Ring von parallel zur Längsrichtung des Folienschlauches gerichtete Luftblasdüsen und mit Abstand dazu einen Ring von entgegengesetzt gerichteten Luftabsaugdüsen; hierbei sind erstere in Produktionsrichtung und letztere entgegen der Produktionsrichtung des Folienschlauches gerichtet.

Aus der DE 44 05 463 A1 ist ein Verfahren und eine Vorrichtung zur Kühlung eines aus einem Folienblaskopf extrudierten Folienschlauches bekannt, bei dem aus einem den Schlauch einfassenden Kühlring mit ringförmigem Austrittsspalt Kühlluft ausgeblasen wird und bei dem Kühlluft aus einem abgeschirmten Raum, der den Schlauch umgibt, mit Abstand zum Kühlring in Produktionsrichtung des Schlauches an einer Ringöffnung abgesaugt wird.

Bei der Herstellung von Blasfolienschläuchen treten nach dem Austritt des heißen Schlauchmaterials aus der Ringdüse im Ausziehbereich des Folienschlauches bis zur Einfriergrenze monomerhaltige Gase aus dem thermoplastischen Material aus. Diese Ausgasungen werden von dem vorbeiströmenden Kühlgas in Produktionsrichtung mitgenommen und lagern sich als wachsartiger Belag auf allen in Abziehrichtung dem Blaskopf nachfolgenden Anlagenteilen wie Kalibrierkorb, Flachlegevorrichtung und Abziehwerk sowie auf Vorrichtungen in der näheren Umgebung ab. Auf dem klebrigen wachsartigen Belag bilden sich durch Schwebepartikel aus der Umgebungsluft zusätzlich Schmutzablagerungen. Diese Wachs- und Schmutzablagerungen behindern den Herstellprozeß des Folienschlauches bzw. die einwandfreie Funktion der Anlagenteile und beeinflussen damit die Produktqualität nachteilig. Eine Übertragung von Schmutzablagerungen auf den Folienschlauch führt insbesondere bei medizinischen Folien und Folien für die Lebensmittelindustrie zu inakzeptablen Qualitätsmängeln. Daher ist bisher eine regelmäßige aufwendige Reinigung der genannten Anlagenteile erforderlich, wobei die Zugänglichkeit der genannten Anlagenteile im Anlagengestell in der Regel schwierig ist. Desweiteren wird vermutet, daß ein Einatmen des mit Ausgasungen in der gasförmigen Phase belasteten Kühlgases gesundheitsschädlich ist.

Hiervon ausgehend liegt der Erfindung die Aufgabe zugrunde, ein Verfahren und eine Vorrichtung der genannten Art vorzuschlagen, mit denen die Verschmutzung der Anlagenteile durch die sich niederschlagenden Ausgasungen verringert bzw. vermieden werden kann. Die Lösung hierfür besteht in einem Verfahren der genannten Art, bei welchem das mit Ausgasungen aus dem Schlauchmaterial belastete Kühlgas in Abzugsrichtung des Folienschlauches stromab von der Kühlgaszuführung an einer Absaugstelle außen am Folienschlauch im wesentlichen ringförmig wieder abgesaugt wird, wobei das belastete Kühlgas stromab von der Einfriergrenze des Folienschlauches abgesaugt wird und wobei der Folienschlauch von einer segmentierten verstellbaren Kalibriervorrichtung mittels Rollenanordnungen stromab von der Einfriergrenze des Folienschlauches kalibriert wird.

Die Lösung besteht weiterhin in einer Vorrichtung der genannten Art, bei der mit Abstand zum Kühlgasring oberhalb (stromab) desselben ein den Folienschlauch umschließende Gasabsaugmittel mit im wesentlichen ringförmig angeordneten Absaugdüsen angeordnet sind, wobei die Gasabsaugmittel innenliegende Absaugdüsen aufweisen und oberhalb der Einfriergrenze des Folienschlauches angeordnet sind und wobei eine segmentierte verstellbare Kalibriervorrichtung mit Rollenanordnungen oberhalb der Einfriergrenze des Folienschlauches angeordnet ist. Mit diesen Mitteln ist es möglich, das mit den Ausgasungen belastete Kühlgas nahe deren Entstehungsort abzusaugen und somit die Verschmutzung der nachfolgenden Anlagenteile zu vermeiden bzw. zu reduzieren und die Arbeitsplatzbelastung herabzusetzen.

Vorzugsweise wird vorgeschlagen, daß der Folienschlauch unmittelbar stromab von der Absaugstelle ringförmig gegenüber den Mitteln zur Absaugung abgedichtet wird. Die entsprechende Vorrichtung sieht damit vor, daß unmittelbar oberhalb (stromab) des Gasabsaugrings eine den Folienschlauch ringförmig gegenüber dem Gasabsaugring abdichtende Blende vorgesehen ist. Hiermit wird zum einen die Effektivität des Absaugvorgangs erhöht und weitere nachfolgende Anlagenteile, beispielsweise eine Flachlegevorrichtung gänzlich vor Verschmutzung geschützt. Die Blende kann als verstellbare Irisblende ausgeführt sein.

Insbesondere wird vorgeschlagen, daß die Irisblende mit einer automatischen Regelung zur Anpassung des Blendendurchmessers an den Durchmesser des Folienschlauches versehen ist. Der Durchmesser des Folienschlauches kann über eine berührungslose Ultraschallmessung laufend erfaßt werden. Hiermit sind geringe Durchmesserschwankungen des Folienschlauches im Produktionsablauf auszugleichen und manuelle Anpassungsmaßnahmen bei Produktionsumstellung zu vermeiden.

Es wird weiterhin vorgeschlagen, daß das belastete Kühlgas stromab von der Einfriergrenze des Folienschlauches abgesaugt wird. Dies bedeutet, daß der Gasabsaugring eben dort angeordnet ist. Hiermit wird der Kühlvorgang der Schlauchfolie bis zum Erreichen der Einfriergrenze nicht behindert.

Es wird bevorzugt vorgesehen, daß das belastete Kühlgas stromab von einer Kalibrierphase des Folienschlauches abgesaugt wird. Dies bedeutet, daß der Gasabsaugring oberhalb (stromab) von einer Kalibriervorrichtung für den Folienschlauch angeordnet ist.

Alternativ kann vorgesehen werden, daß das belastete Kühlgas bereits stromauf von der Kalibrierphase abgesaugt wird. Hierbei ist der Gasabsaugring zwischen Einfriergrenze und der Kalibriervorrichtung angeordnet. Dies ist aber besonders effektiv im Hinblick auf einen Schutz der Kalibriervorrichtung und nachfolgender Anlagenteile vor Verschmutzung.

Ergänzend wird vorgeschlagen, daß belastetes Kühlgas im Bereich der Kalibrierphase des Folienschlauches abgesaugt wird, d. h. daß ein Gasabsaugring oder mehrere Gasabsaugbalken im Bereich der Kalibriervorrichtung für den Folienschlauch angeordnet sind. Hiermit kann bereits im Bereich der offenen Struktur eines Kalibrierkorbes belastetes Kühlgas so gezielt abgesaugt werden, daß die Teile der Verstellvorrichtungen der Kalibriervorrichtung ebenfalls von Verschmutzung freigehalten werden.

Insbesondere wird vorgesehen, daß eine Mehrzahl von Absaugbalken mit einer segmentierten verstellbaren Kalibriervorrichtung verbunden ist.

In einfacher Ausgestaltung des Verfahrens kann das abgesaugte belastete Kühlgas in die Umgebung außerhalb der Produktionshalle abgeblasen werden. Unter Berücksichtigung von Umweltschutzaspekten ist es jedoch bevorzugt, das mit den Ausgasungen belastete Kühlgas zu filtern, bevor es innerhalb oder außerhalb der Produktionshalle abgeblasen wird. Hierfür wird insbesondere ein Elektrofilter in einer Absaugleitung vor einem Sauggebläse vorgesehen.

Bei einer Folienschlauchherstellung mit zusätzlicher Innenkühlung kann auch das belastete abgesaugte Kühlgas aus der Innenkühlung mit dem belasteten Kühlgas der Außenkühlung zusammengeführt werden und mit diesem zusammen gefiltert werden.

Nach einer weiteren Verbesserung des Verfahrens wird vorgeschlagen, daß stromab von der Absaugstelle des belasteten Kühlgases der Folienschlauch zur Nachkühlung erneut im wesentlichen ringförmig mit Kühlgas angeblasen wird, d. h. daß unmittelbar oberhalb (stromab) von dem Gasabsaugring ein weiterer Kühlgasring angeordnet ist. Hierbei wird vorgesehen, daß das erneute Anblasen mit Kühlgas stromab von der ringförmigen Abdichtstelle erfolgt, indem der weitere Kühlgasring unmittelbar oberhalb (stromab) der Blende angeordnet ist. Mit diesen Mitteln ist eine Nachkühlung des noch immer relativ warmen Schlauchmaterials möglich, die die weitere störungsfreie Handhabung des Folienschlauches, insbesondere das Flachlegen und Aufwikkeln auf einen Coil ermöglicht.

Da die am Folienschlauch entlangströmende bereits erwärmte Kühlluft am Absaugring vollständig vom Folienschlauch abgezogen wird, erreicht das zusätzlich angeblasene Kühlgas den Folienschlauch strömungstechnisch ungehindert und erzielt mangels Vermischung mit erwärmtem Kühlgas eine hohe Nachkühlwirkung. Dies ermöglicht bei Hochleistungsanlagen und Anlagen mit geringer Bauhöhe eine hohe Produktionsleistung.

Die Absaugmenge des belasteten Kühlgases kann der Zuführmenge des unmittelbar nach dem Austritt des Folienschlauches aus der Ringdüse frisch zugeführten Kühlgases automatisch angepaßt werden. Hierfür ist eine entsprechende Regelvorrichtung vorzusehen.

Die erfindungsgemäßen Vorrichtungen sind besonders vorteilhaft dadurch, daß sie verschiedenen Folienschlauchdurchmessern leicht angepaßt werden können, insbesondere im Bereich der Abdichtung des erstgenannten Absaugringes gegenüber dem Folienschlauch mittels einer verstellbaren Blende und im Bereich der Kalibriervorrichtung durch Kombination einzelner Absaugbalken oder Absaugtrichter mit den Segmenten einer verstellbaren Kalibriervorrichtung.

Nach einer weiteren günstigen Ausgestaltung ist es möglich, den erstgenannten Absaugring, die Blende und den Zusatzkühlring so baulich miteinander zu verbinden, daß die Baugruppe nur eine einzige gemeinsame Aufhängung im Anlagengestell benötigt.

Bevorzugte Ausführungsbeispiele der Erfindung sind in den Zeichnungen dargestellt und werden nachstehend beschrieben.
- Figur 1: zeigt eine Folienblasanlage nach der Erfindung in einer ersten Ausführung in Gesamtdarstellung;
- Figur 2: zeigt Teile der Anlage nach Figur 1 in vergrößerter Darstellung;
- Figur 3: zeigt eine Folienblasanlage nach der Erfindung in einer zweiten Ausführung in Gesamtdarstellung;
- Figur 4: zeigt Teile der Anlage nach Figur 3 in vergrößerter Darstellung;

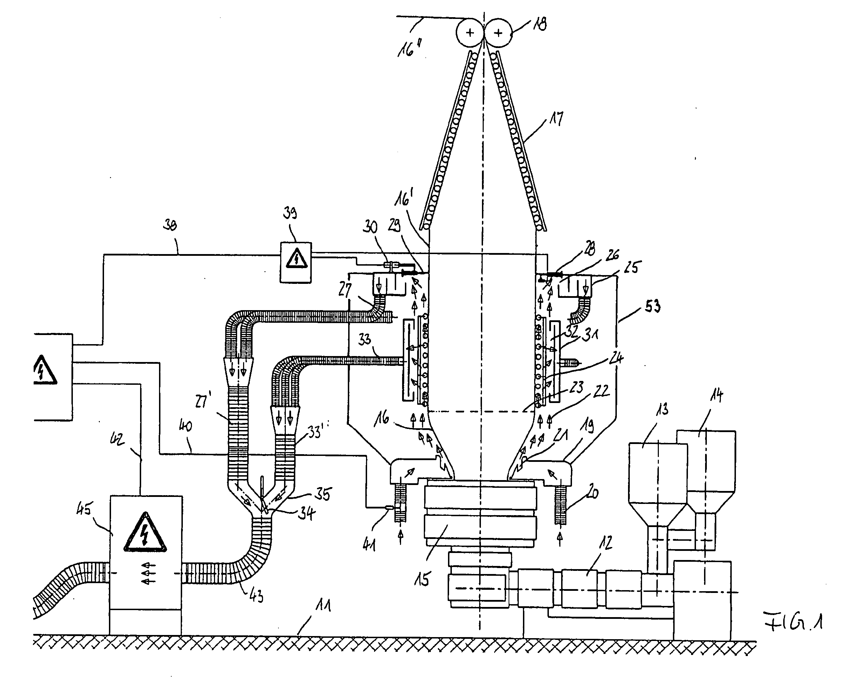

In Figur 1 ist in Seitenansicht und teilweise im Längsschnitt durch die Achse eines Blasfolienschlauches eine Anlage zur Durchführung des erfindungsgemäßen Verfahrens und mit den erfindungsgemäßen Merkmalen gezeigt. Auf einem Maschinenfundament 11 steht ein Extruder 12, an dem zwei Aufgabetrichter 13, 14 für thermoplastisches Material zu erkennen sind. In Granulatform über die Trichter 13, 14 aufgegebenes thermoplastisches Material wird durch den Druck und zusätzliche Heizmittel in der Schnecke des Extruders 12 plastifiziert und homogenisiert und in einen sich an den Extruder anschließenden Blaskopf 15 mit vertikaler Achse gedrückt. Der Blaskopf 15 hat auf der Oberseite eine nicht im einzelnen erkennbare Ringdüse, aus der ein sich erweiternder achssymmetrischer Folienschlauch 16 aus zunächst noch plastifiziertem Folienmaterial austritt. Nach Erstarrung des Materials behält der Folienschlauch 16' seinen Durchmesser im wesentlichen bei. Der Folienschlauch 16' wird in einer Flachlegevorrichtung 17 flach gedrückt und über ein Abziehwerk 18 nach oben abgezogen. Der flachgedrückte Folienschlauch 16" wird anschließend auf Coils aufgewickelt. In Richtung vom Blaskopf 15 zum Abziehwerk 18 werden die funktionellen Begriffe "vor" und "stromab von" derart verwendet, daß sie in räumlicher Beziehung "unter" und "oberhalb von" bedeuten.

Unmittelbar über dem Blaskopf 15 ist ein Kühlgasring 19 mit mehreren Gaszuleitungen 20 gezeigt. Der Kühlgasring 19 hat innenliegende Austrittsdüsen 21, aus denen das Kühlgas ausströmt und den Folienschlauch 16, der unter erhöhtem Innendruck steht, ringförmig im wesentlichen wandparallel anströmt. Die Kühlgasströmung ist mit Pfeilen 22 symbolisiert. Der in diesem Bereich plastifizierte Folienschlauch 16 erweitert sich zunächst im Durchmesser unter dem genannten Überdruck im Inneren, bis er unter der Wirkung des Kühlgases erhärtet und konstanten Durchmesser annimmt. Der Ort des Übergangs vom plastifizierten Material zum erhärteten Material wird "Einfriergrenze" genannt und ist mit 23 bezeichnet. Oberhalb, d. h. in Abzugsrichtung stromab von der Einfriergrenze 23, befindet sich eine Kalibriervorrichtung 24, die übereinanderliegende Rollenanordnungen enthält, die sich im wesentlichen ringförmig um den Folienschlauch 16' legen. Um eine Anpassung an Folienschläuche unterschiedlichen Durchmessers zu ermöglichen, befinden sich hierbei die Rollenanordnungen in der Regel auf einzelnen Teilumfänge bildenden schwenkbaren Segmenten, mittels derer der Durchmesser der Kalibriervorrichtung verändert werden kann. Im Querschnitt können diese Segmente vereinfacht eine polygonförmige Kalibriervorrichtung bilden. Der noch relativ warme Folienschlauch 16' wird durch die Kalibriervorrichtung im Querschnitt stabilisiert.

Stromab von der Kalibriervorrichtung 24 befindet sich ein erfindungsgemäßer Gasabsaugring 25 mit innenliegenden ringförmigen Ansaugöffnungen 26, der das mit Ausgasungen aus dem Folienschlauch belastete Kühlgas absaugen kann. An den Gasabsaugring 25 sind umfangsverteilt Absaugleitungen 27 angeschlossen. Das mit Ausgasungen belastete Kühlgas ist durch Pfeile 28 symbolisiert. Unmittelbar stromab vom Gasabsaugring 25 und mechanisch mit diesem verbunden liegt eine verstellbare Blende 29, die den Folienschlauch 16' abdichtend umschließt. Die Blende 29 ist über eine Verstellvorrichtung 30 im Öffnungsquerschnitt verstellbar und damit an verschiedene Durchmesser des Folienschlauchs 16' anpaßbar. Durch das Abdichten des Folienschlauches oberhalb des Gasabsaugrings 25 wird verhindert, daß Reinluft aus einem Bereich stromab vom Gasabsaugring angesaugt wird, so daß die Absaugung des belasteten Kühlgases bei geringem Energieeinsatz optimiert ist. Im Bereich der Kalibriervorrichtung 24 befindet sich radial außerhalb der Kalibriervorrichtung ein weiterer Gasabsaugring oder eine Mehrzahl von einzelnen Gasabsaugtrichtern oder Gasabsaugbalken 31, die mit einer Mehrzahl von über dem Umfang verteilten Absaugleitungen 33 verbunden sind. Hierbei kann jeweils ein Gasabsaugbalken einem der zuvor genannten Segmente der Kalibriervorrichtung zugeordnet sein, so daß mit einer Anpassung der Kalibriervorrichtung an unterschiedliche Durchmesser des Folienschlauches 16' zugleich eine Anpassung der zusätzlichen Absaugvorrichtung an die unterschiedlichen Durchmesser erfolgen kann. Die Mehrzahl der Absaugleitungen 27 wird zunächst zu einer Leitung 27' zusammengeführt. Ebenso wird die Mehrzahl der Absaugleitungen 33 zu einer einzigen Leitung 33' zusammengeführt. Die Leitungen 27' und 33' werden dann zu einer einzigen Gasabsaugleitung 43 vereint, wobei eine Regelklappe 34 im Bereich eines Hosenrohres 35 angeordnet ist. An die Absaugleitung 43 schließt sich ein Sauggebläse 44 an. In der Absaugleitung 43 kann vor dem Sauggebläse 44 ein Filter, insbesondere ein Elektrofilter 45 integriert sein, wenn es aus Umweltschutzgründen unmöglich ist, die Absauggase in die Umgebung außerhalb einer Produktionshalle abzublasen. Ein Steuergerät 36 mit Prozessor steuert über eine Steuerleitung 37 das Absauggebläse 44 sowie über eine Steuerleitung 38 ein weiteres Steuergerät 39 zur Ansteuerung der Verstellvorrichtung 30 für die Blende 29. Über eine Meßleitung 40 werden die Signale eines Kühlgasmengenstromsensors 41 in den Kühlluftzuführungsleitungen 20 an das Steuergerät 36 übermittelt. Über eine Meßleitung 42 werden Signale über die Druck- bzw. Mengenstromverhältnisse am Elektrofilter 45 zum Steuergerät 36 übermittelt. Das Steuergerät 36 kann über eine weitere Steuerleitung, die hier nicht dargestellt ist, auch das ebenfalls nicht dargestellte Kühlgasgebläse prozessorgesteuert regeln. Der gesamte Bereich vom ersten Kühlgasring 19 bis zum Gasabsaugring 25 ist von einer Einhausung 53 eingeschlossen, so daß das mit Ausgasungen belastete Kühlgas vom Arbeitsplatz des Bedienpersonals ferngehalten wird. Die Leitungen 27, 33 sind abgedichtet durch die Einhausung hindurchgeführt.

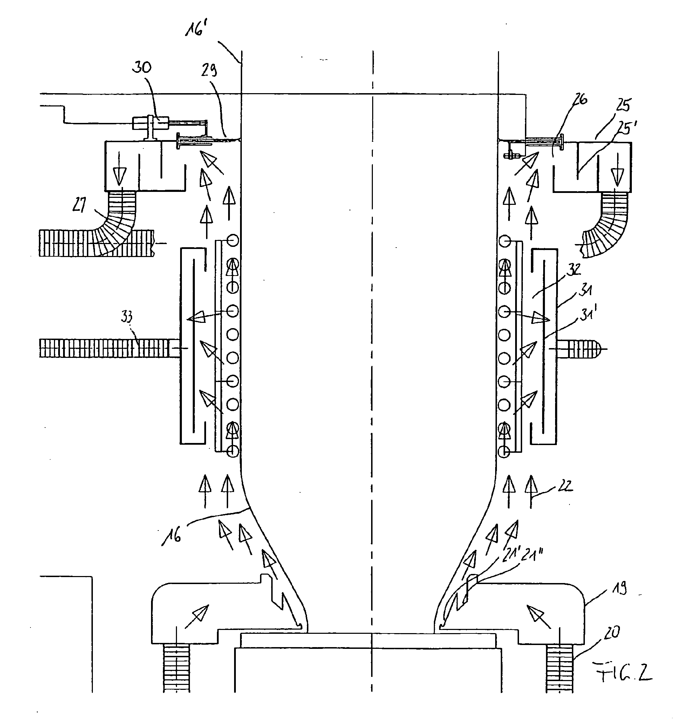

In Figur 2 sind gleiche Einzelheiten wie in Figur 1 mit gleichen Ziffern bezeichnet. Auf die vorangehende Beschreibung wird insoweit Bezug genommen. Es ist hier angedeutet, daß der Kühlgasring 19 zwei Ausrittsdüsen 21', 21" hat. Weiterhin ist erkennbar, daß im Absaugring 25 Labyrintheinbauten 25' vorgesehen sind, um das Druckniveau an der Ansaugöffnung 26 über dem Umfang zu vereinheitlichen und den Einfluß der einzelnen Gasabsaugleitungen 27 zu unterdrücken. Ebenso ist erkennbar, daß in den Gasabsaugbalken 31 Einbauten 31' vorgesehen sind, um das Druckniveau in der Gaseintrittsöffnung 32 zu beruhigen.

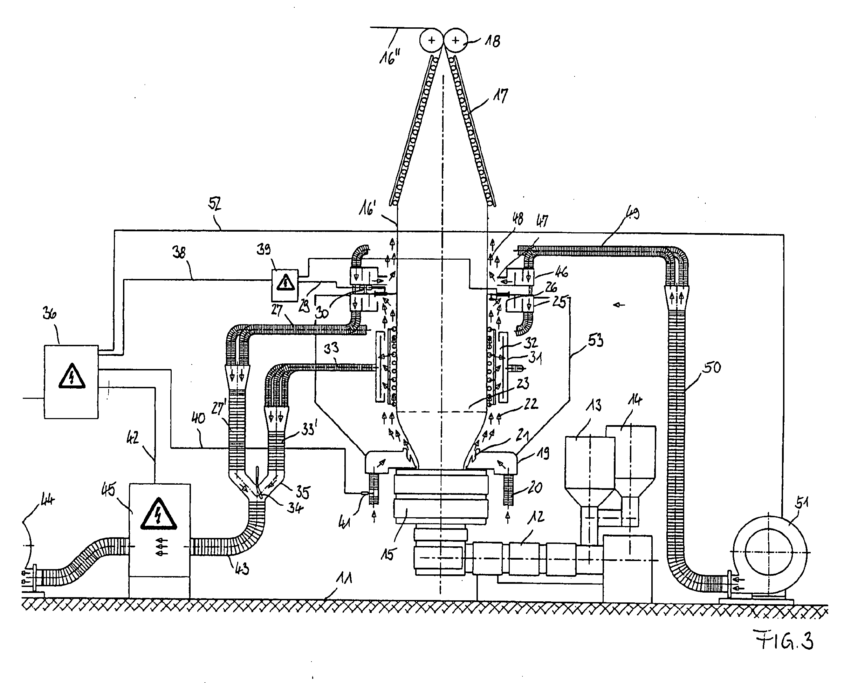

In Figur 3 sind gleiche Einzelheiten wie in Figur 1 mit gleichen Bezugsziffern belegt und haben die gleiche Funktion wie oben beschrieben. Auf die Beschreibung der Figur 1 wird insoweit inhaltlich Bezug genommen. In Ergänzung zu den dort beschriebenen Einzelheiten ist ein weiterer Kühlgasring 46 erkennbar, der über innenliegende Austrittsdüsen 47 Kühlgas zu Nachkühlzwecken im wesentlichen radial gegen den Folienschlauch 16' bläst. Die zusätzlichen Kühlgasströme sind durch Pfeile 48 symbolisiert. An den zusätzlichen Kühlgasring 46 sind Gaszufuhrleitungen 49 angeschlossen, die insgesamt über eine Versorgungsleitung 50 von einem weiteren Kühlgasdruckgebläse 51 versorgt werden. Das Kühlgasdruckgebläse 51 wird über eine Steuerleitung 52 vom Steuergerät 36 geregelt. Der noch relativ warme Folienschlauch 16' kann hiermit nachgekühlt werden, so daß die Flachlegeanordnung 17 und das Abzugswerk 18 ohne die Gefahr eines Verklebens der Folienlagen beim Flachlegen in Wirkung gebracht werden können. Auch hier ist der Bereich vom ersten Kühlgasring 19 bis zum Gasabsaugring 25 von einer Einhausung 33 eingeschlossen, der abdichtend an die genannten Teile anschließt, und ein Abströmen des mit Ausgasungen belasteten Kühlgases in die Arbeitsplatzumgebung verhindert.

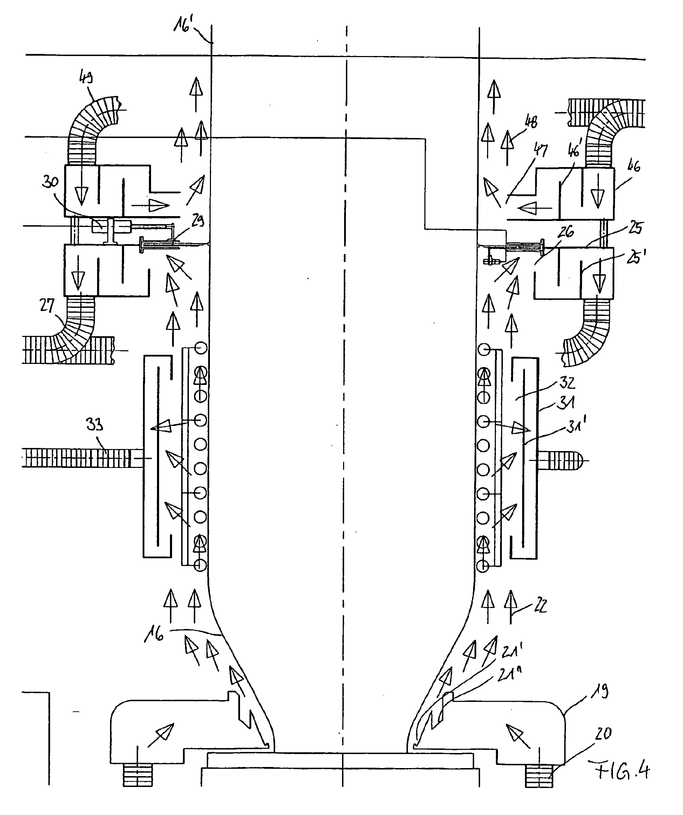

In Figur 4 sind gleiche Einzelheiten wie in Figur 3 mit gleichen Ziffern bezeichnet. Auf die vorangehende Beschreibung wird insoweit Bezug genommen. Es ist hier angedeutet, daß der Kühlgasring 19 zwei Ausrittsdüsen 21', 21 " hat. Weiterhin ist erkennbar, daß im Absaugring 25 Labyrintheinbauten 25' vorgesehen sind, um das Druckniveau an der Ansaugöffnung 26 über dem Umfang zu vereinheitlichen und den Einfluß der einzelnen Gasabsaugleitungen 27 zu unterdrücken. Ebenso ist erkennbar, daß in den Gasabsaugbalken 31 Einbauten 31' vorgesehen sind, um das Druckniveau in der Gaseintrittsöffnung 32 zu beruhigen. Schließlich sind im zusätzlichen Kühlgasring 46 Labyrintheinbauten 46' zur Vergleichmäßigung des zusätzlichen Kühlgasstromes an der Austrittsdüse 47 erkennbar. Die Baugruppen Absaugring 25, Blende 29 und zusätzlicher Kühlgasring 46 sind konstruktiv miteinander verbunden.

### Bezugszeichenliste

- 11: Fundament
- 12: Extruder
- 13: Aufgabetrichter
- 14: Aufgabetrichter
- 15: Düsenkopf
- 16: Folienschlauch
- 17: Flachlegevorrichtung
- 18: Abziehwerk
- 19: Kühlgasring
- 20: Kühlgaszuführung
- 21: Kühlgasringdüse
- 22: Kühlgas (Pfeil)
- 23: Einfriergrenze
- 24: Kalibriervorrichtung
- 25: Gasabsaugring
- 26: Absaugringdüse
- 27: Gasabführung
- 28: Abgas (Pfeil)
- 29: Blende
- 30: Verstellvorrichtung
- 31: Gasabsaugbalken
- 32: Absaugschlitz
- 33: Gasabführung
- 34: Regelklappe
- 35: Hosenrohr
- 36: Steuergerät
- 37: Steuerleitung
- 38: Steuerleitung
- 39: Steuergerät
- 40: Meßleitung
- 41: Meßfühler
- 42: Meßleitung
- 43: Absaugleitung
- 44: Sauggebläse
- 45: Elektrofilter
- 46: Kühlgasring
- 47: Kühlgasringdüse
- 48: Kühlgas (Pfeil)
- 49: Kühlgaszuführung
- 50: Kühlgasleitung
- 51: Kühlgasgebläse
- 52: Steuerleitung
- 53: Einhausung

## Patentansprüche

1. Verfahren zum Kühlen eines Folienschlauches (16) bei der Blasfolienherstellung, bei dem der Folienschlauch (16) nach dem Austritt aus der Ringdüse eines Blaskopfes (15) von außen im wesentlichen ringförmig mit Kühlgas angeblasen wird, wobei das mit Ausgasungen aus dem Schlauchmaterial belastete Kühlgas in Abzugsrichtung des Folienschlauches (16) stromab von der Kühlgaszuführung an einer Absaugstelle außen am Folienschlauch im wesentlichen ringförmig wieder abgesaugt wird, wobei das belastete Kühlgas stromab von der Einfriergrenze (23) des Folienschlauches (16) abgesaugt wird
**dadurch gekennzeichnet,**
**daß** der Folienschlauch (16) mittels Rollenanordnungen von einer segmentierten verstellbaren Kalibriervorrichtung stromab von der Einfriergrenze (23) des Folienschlauches (16) kalibriert wird.

2. Verfahren nach Anspruch 1,
**dadurch gekennzeichnet,**
**daß** der Folienschlauch (16) unmittelbar stromab von der genannten Absaugstelle an einer Abdichtstelle ringförmig gegenüber den Mitteln zur Absaugung abgedichtet wird.

3. Verfahren nach einem der Ansprüche 1 oder 2,
**dadurch gekennzeichnet,**
**daß** belastetes Kühlgas an einer Absaugstelle stromauf von der Kalibrierphase des Folienschlauches (16) abgesaugt wird.

4. Verfahren nach einem der Ansprüche 1 bis 3,
**dadurch gekennzeichnet,**
**daß** belastetes Kühlgas an der Absaugstelle stromab von der Kalibrierphase des Folienschlauches (16) abgesaugt wird.

5. Verfahren nach einem der Ansprüche 1 bis 4,
**dadurch gekennzeichnet,**
**daß** belastetes Kühlgas an der Absaugstelle im Bereich der Kalibrierphase des Folienschlauches (16) abgesaugt wird.

6. Verfahren nach einem der Ansprüche 1 bis 5,
**dadurch gekennzeichnet,**
**daß** der Folienschlauch (16) stromab von der oder den Absaugstellen des belasteten Kühlgases zur Nachkühlung erneut von außen im wesentlichen ringförmig mit Kühlgas angeblasen wird.

7. Verfahren nach Anspruch 6,
**dadurch gekennzeichnet,**
**daß** das erneute Anblasen mit Kühlgas stromab von der ringförmigen Abdichtstelle erfolgt.

8. Verfahren nach einem der Ansprüche 1 bis 7,
**dadurch gekennzeichnet,**
**daß** die Absaugmenge des belasteten Kühlgases der jeweiligen nach dem Austritt des Folienschlauches aus der Ringdüse zugeführten Kühlgasmenge automatisch geregelt angepaßt wird.

9. Verfahren nach einem der Ansprüche 1 bis 8,
**dadurch gekennzeichnet,**
**daß** aus einem Innenkühlprozeß für den Folienschlauch (16) herrührendes mit Ausgasungen belastetes Kühlgas mit dem belastetes Kühlgas aus der Absaugung an der Absaugstelle außen zusammengeführt wird.

10. Verfahren nach einem der Ansprüche 1 bis 9,
**dadurch gekennzeichnet,**
**daß** das belastete Kühlgas gefiltert wird.

11. Verfahren nach einem der Ansprüche 1 bis 10,
**dadurch gekennzeichnet,**
**daß** der Strom des belasteten Kühlgases von der Umgebungsluft getrennt gehalten und geführt wird.

12. Vorrichtung zum Kühlen eines Folienschlauches (16) bei der Blasfolienherstellung, bei der oberhalb der Ringdüse eines Blaskopfes außerhalb des Folienschlauches zumindest ein Kühlgasring (19) mit innenliegendem in wesentlichen ringförmigem Kühlgasaustritt (21) angeordnet ist, wobei mit Abstand zum Kühlgasring (19) oberhalb desselben ein den Folienschlauch umschließende Gasabsaugmittel mit im wesentlichen ringförmig angeordneten Absaugdüsen (26) angeordnet sind,
**dadurch gekennzeichnet,**
**daß** die Gasabsaumittel innenliegende Ansaugdüsen (26) aufweisen und oberhalb der Einfriergrenze (23) des Folienschlauches (16) angeordnet sind und daß eine segmentierte verstellbare Kalibriervorrichtung (24) mit Rollenanordnungen oberhalb der Einfriergrenze (23) des Folienschlauches (16) angeordnet ist.

13. Vorrichtung nach Anspruch 12,
**dadurch gekennzeichnet,**
**daß** unmittelbar oberhalb der Gasabsaugmittel eine den Folienschlauch (16) ringförmig gegenüber den Gasabsaumitteln abdichtende Blende (29) vorgesehen ist.

14. Vorrichtung nach Anspruch 13,
**dadurch gekennzeichnet,**
**daß** die Blende (29) eine verstellbare, insbesondere in Anpassung an den Folienschlauchdurchmesser automatisch regelbare Irisblende ist.

15. Vorrichtung nach einem der Ansprüche 12 bis 14,
**dadurch gekennzeichnet,**
**daß** ein Gasabsaugring (25) oberhalb von der Kalibriervorrichtung (24) für den Folienschlauch (16) angeordnet ist.

16. Vorrichtung nach einem der Ansprüche 12 bis 15,
**dadurch gekennzeichnet,**
**daß** ein Gasabsaugring (25) unterhalb von der Kalibriervorrichtung (24) für den Folienschlauch (16) angeordnet ist.

17. Vorrichtung nach einem der Ansprüche 12 bis 16,
**dadurch gekennzeichnet,**
**daß** ein Gasabsaugring oder mehrere Gasabsaugbalken (31) im Bereich der Kalibriervorrichtung (24) für den Folienschlauch (16) angeordnet sind.

18. Vorrichtung nach Anspruch 17,
**dadurch gekennzeichnet,**
**daß** eine Mehrzahl von Gasabsaugbalken (31) mit der Kalibriervorrichtung (24) verbunden ist.

19. Vorrichtung nach einem der Ansprüche 12 bis 18,
**dadurch gekennzeichnet,**
**daß** unmittelbar oberhalb von dem Gasabsaugring (25) außerhalb des Folienschlauches ein weiterer Kühlgasring (46) angeordnet ist.

20. Vorrichtung nach Anspruch 19,
**dadurch gekennzeichnet,**
**daß** der weitere Kühlgasring (46) unmittelbar oberhalb der Blende (29) angeordnet ist.

21. Vorrichtung nach einem der Ansprüche 12 bis 20,
**gekennzeichnet durch**
eine Regelvorrichtung (36) zur Regelung der Absaugmenge des belasteten Kühlgases in Abhängigkeit von der Zuführmenge des oberhalb der Ringdüse des Blaskopfes über den ersten Kühlgasring (19) zugeführten Kühlgases.

22. Vorrichtung nach einem der Ansprüche 12 bis 21 mit einer Schlauchinnenkühlung,
**dadurch gekennzeichnet,**
**daß** die Absaugleitung für belastetes Kühlgas der Schlauchinnenkühlung mit der Absaugleitung für das belastete Kühlgas der Außenkühlung zusammengeführt ist.

23. Vorrichtung nach einem der Ansprüche 12 bis 22,
**dadurch gekennzeichnet,**
**daß** ein Filter (45) in einer Gasabsaugleitung (43) vor einem Sauggebläse (44) angeordnet ist.

24. Vorrichtung nah einem der Ansprüche 12 bis 23,
**dadurch gekennzeichnet,**
**daß** eine Einhausung (53) vorgesehen ist, die den Strom des belasteten Kühlgases vom ersten Kühlgasring (19) bis zum Gasabsaugring (25) gegenüber der Umgebung abschließt.

## Claims

1. A method of cooling blown film (16) during the production of blown film, wherein, after having left the annular nozzle of a blowing head, the blown film (16) is blown at by cooling gas from the outside substantially annularly, wherein the cooling gas polluted or loaded by evaporations from the blown film material, in the extraction direction of the blown film (16), downstream from the cooling gas supply, is extracted substantially annularly in an extraction region on the outside of the blown film, wherein the loaded cooling gas is extracted downstream from the freezing limit (23) of the blown film (16),
**characterised in**
**that** the blown film (16) is calibrated by roller assemblies of a segmented adjustable calibrating device downstream from the freezing limit (23) of the blown film (16).

2. A method according to claim 1,
**characterised in**
**that** the blown film (16), directly downstream from said extraction region, in a sealing region, is annularly sealed relative to the extraction means.

3. A method according to any one of claims 1 or 2,
**characterised in**
**that** loaded cooling gas is extracted in an extraction region upstream from the calibrating phase of the blown film (16).

4. A method according to any one of claims 1 to 3,
**characterised in**
**that** loaded cooling gas is extracted in the extraction region downstream from the calibrating phase of the blown film (16).

5. A method according to any one of claims 1 to 4,
**characterised in**
the loaded cooling gas is extracted in the extraction region in the region of the calibrating phase of the blown film (16).

6. A method according to any one of claims 1 to 5,
**characterised in**
**that** the blown film (16), downstream from the extraction region(s) of the loaded cooling gas, for recooling purposes, is again substantially annularly blown at from the outside by cooling gas.

7. A method according to claim 6,
**characterised in**
**that** the renewed operation of the blown film (6) being blown at by cooling gas takes place downstream from the annular sealing region.

8. A method according to any one of claims 1 to 7,
**characterised in**
**that** the extraction quantity of the loaded cooling gas is automatically controlled and adapted to the respective cooling gas quantity supplied after the blown film has left the annular nozzle.

9. A method according to any one of claims 1 to 8,
**characterised in**
**that** cooling gas originating from an internal cooling process for the blown film (16) and loaded with evaporations is merged on the outside with the loaded cooling gas extracted in the extraction region.

10. A method according to any one of claims 1 to 9,
**characterised in**
**that** the loaded cooling gas is filtered.

11. A method according to any one of claims 1 to 10,
**characterised in**
**that** the flow of loaded cooling gas is held and guided separately from the environmental air.

12. A device for cooling blown film (16) during the production of blown film wherein, above the annular nozzle of the blowing head, outside the blown film, there is arranged at least one cooling gas ring (19) with an inner substantially annular cooling gas exit (21), wherein at a distance from the cooling gas ring (19), above same, there are arranged gas extraction means which surround the blown film and which comprise substantially annularly arranged extraction nozzles (26),
**characterised in**
**that** the gas extraction means comprise inner suction nozzles and are arranged above the freezing limit (23) of the blown film (16) and that a segmented adjustable calibrating device (24) with roller assemblies is arranged above the freezing limit (23) of the blown film (16).

13. A device according to claim 12,
**characterised in**
**that** directly above the gas extraction means there is provided a diaphragm (29) which annularly seals the blown film (16) relative to the gas extraction means.

14. A device according to claim 13,
**characterised in**
**that** the diaphragm (29) is an adjustable iris diaphragm which, more particularly, is automatically controllable for being adapted to the blown film diameter.

15. A device according to any one of claims 12 to 14,
**characterised in**
**that** a gas extraction ring (25) is arranged above the calibrating device (24) for the blown film (16).

16. A device according to any one of claims 12 to 15,
**characterised in**
**that** the gas extraction ring (25) is arranged underneath the calibrating device (24) for the blown film (16).

17. A device according to any one of claims 12 to 16,
**characterised in**
**that** the gas extraction ring or a plurality of gas extraction beams (31) are arranged in the region of the calibrating device (24) for the blown film (16).

18. A device according to claim 17,
**characterised in**
**that** a plurality of gas extraction beams (31) are connected to the calibrating device (24).

19. A device according to any one of claims 12 to 18,
**characterised in**
**that** directly above the gas extraction ring (25) outside the blown film, there is arranged a further cooling gas ring (46).

20. A device according to claim 19,
**characterised in**
**that** the further cooling gas ring (46) is arranged directly above the diaphragm (29).

21. A device according to any one of claims 12 to 20,
**characterised by**
a control device (36) for controlling the extracted quantity of the loaded cooling gas as a function of the quantity of cooling gas supplied above the annular nozzle of the blowing head via the first cooling gas ring (19).

22. A device according to any one of claims 12 to 21 comprising inner blown film cooling means,
**characterised in**
**that** an extraction line for loaded cooling gas of the inner blown film cooling means is joined with an extraction line for the loaded cooling gas of the outer cooling means.

23. A device according to any one of claims 12 to 22,
**characterised in**
**that** a filter (45) in a gas extraction line (43) is arranged in front of a suction blower (44).

24. A device according to any one of claims 12 to 23,
**characterised in**
**that** there is provided a housing (53) which seals the flow of the loaded cooling gas from the first cooling gas ring (19) to the gas extraction ring (25) relative to the environment.

## Revendications

1. Procédé de refroidissement d'un film tubulaire (16), lors de la fabrication de films de soufflage, selon lequel le film tubulaire (16), après la sortie de la buse annulaire d'une tête de soufflage (15), est soumis par l'extérieur, au soufflage sensiblement annulaire de gaz de refroidissement, le gaz de refroidissement pollué ou chargé de dégagements gazeux du matériau constitutif du film tubulaire étant à nouveau aspiré, sensiblement de manière annulaire, au niveau d'une zone d' aspiration à l'extérieur du film tubulaire, en aval de l' amenée du gaz de refroidissement en se référant à la direction d'extraction du film tubulaire, et le gaz de refroidissement chargé étant aspiré en aval de la limite de solidification (23) du film tubulaire (16),
**caractérisé en ce que** le film tubulaire (16) est calibré en aval de la limite de solidification (23) du film tubulaire (16), au moyen d'agencements de galets d'un dispositif de calibrage segmenté, réglable.

2. Procédé selon la revendication 1, **caractérisé en ce que** le film tubulaire (16) est rendu étanche annulairement par rapport aux moyens pour l'aspiration, au niveau d'une zone d'étanchéité, directement en aval de la zone d'aspiration citée.

3. Procédé selon l'une des revendications 1 ou 2, **caractérisé en ce que** du gaz de refroidissement chargé est aspiré au niveau d'une zone d'aspiration en amont de la phase de calibrage du film tubulaire (16).

4. Procédé selon l'une des revendications 1 à 3, **caractérisé en ce que** du gaz de refroidissement chargé est aspiré au niveau de la zone d'aspiration en aval de la phase de calibrage du film tubulaire (16).

5. Procédé selon l'une des revendications 1 à 4, **caractérisé en ce que** du gaz de refroidissement chargé est aspiré au niveau de la zone d'aspiration dans la zone de la phase de calibrage du film tubulaire (16).

6. Procédé selon l'une des revendications 1 à 5, **caractérisé en ce que** le film tubulaire (16), en aval de la zone ou des zones d'aspiration du gaz de refroidissement chargé, est à nouveau soumis par l'extérieur, au soufflage sensiblement annulaire de gaz de refroidissement, pour un refroidissement postérieur.

7. Procédé selon la revendication 6, **caractérisé en ce que** le nouveau soufflage de gaz de refroidissement est effectué en aval de la zone d'étanchéité de forme annulaire.

8. Procédé selon l'une des revendications 1 à 7, **caractérisé en ce que** la quantité d'aspiration du gaz de refroidissement chargé est adaptée de manière automatiquement régulée, à la quantité de gaz de refroidissement considérée amenée après la sortie du film tubulaire de la buse annulaire.

9. Procédé selon l'une des revendications 1 à 8, **caractérisé en ce que** du gaz de refroidissement chargé de dégagements gazeux, qui provient d'un processus de refroidissement intérieur pour le film tubulaire (16), est rassemblé en commun avec le gaz de refroidissement chargé provenant de l'aspiration au niveau de la zone d'aspiration à l'extérieur.

10. Procédé selon l'une des revendications 1 à 9, **caractérisé en ce que** le gaz de refroidissement chargé est filtré.

11. Procédé selon l'une des revendications 1 à 10, **caractérisé en ce que** l'écoulement du gaz de refroidissement chargé est maintenu séparé et véhiculé de manière séparée de l'air environnant.

12. Dispositif pour le refroidissement d'un film tubulaire (16), dans le cadre de la fabrication de films de soufflage, dans lequel au-dessus de la buse annulaire d'une tête de soufflage, à l'extérieur du film tubulaire, est agencé au moins un anneau de gaz de refroidissement (19) avec une sortie de gaz de refroidissement (21) sensiblement de forme annulaire et située à l'intérieur, des moyens d'aspiration de gaz, qui entourent le film tubulaire et qui comportent des buses d'aspiration (26) agencées sensiblement de manière annulaire, étant agencés à distance de l'anneau de gaz de refroidissement (19), au-dessus de celui-ci,
**caractérisé en ce que** les moyens d'aspiration de gaz présentent des buses aspirantes (26) situées à l'intérieur et sont agencés au-dessus de la limite de solidification (23) du film tubulaire (16), et **en ce qu'**un dispositif de calibrage (24) segmenté, réglable, et comprenant des agencements de galets, est agencé au-dessus de la limite de solidification (23) du film tubulaire (16).

13. Dispositif selon la revendication 12, **caractérisé en ce que** directement au-dessus des moyens d'aspiration de gaz est prévu un diaphragme (29) assurant l'étanchéité annulaire du film tubulaire (16) par rapport aux moyens d'aspiration de gaz.

14. Dispositif selon la revendication 13, **caractérisé en ce que** le diaphragme (29) est un diaphragme à iris pouvant se régler automatiquement, notamment en s'adaptant au diamètre du film tubulaire.

15. Dispositif selon l'une des revendications 12 à 14, **caractérisé en ce qu'**un anneau d'aspiration de gaz (25) est agencé au-dessus du dispositif de calibrage (24) pour le film tubulaire (16).

16. Dispositif selon l'une des revendications 12 à 15, **caractérisé en ce qu'**un anneau d'aspiration de gaz (25) est agencé en-dessous du dispositif de calibrage (24) pour le film tubulaire (16).

17. Dispositif selon l'une des revendications 12 à 16, **caractérisé en ce qu'**un anneau d'aspiration de gaz ou plusieurs barres d'aspiration de gaz (31) sont agencés dans la zone du dispositif de calibrage (24) pour le film tubulaire (16).

18. Dispositif selon la revendication 17, **caractérisé en ce que** plusieurs barres d'aspiration de gaz (31) sont reliées au dispositif de calibrage (24).

19. Dispositif selon l'une des revendications 12 à 18, **caractérisé en ce que** directement au-dessus de l'anneau d'aspiration de gaz (25) est agencé, à l'extérieur du film tubulaire (16), un autre anneau de gaz de refroidissement (46).

20. Dispositif selon la revendication 19, **caractérisé en ce que** ledit autre anneau de gaz de refroidissement (46) est agencé directement au-dessus du diaphragme (29).

21. Dispositif selon l'une des revendications 12 à 20, **caractérisé par** un dispositif de régulation (36) pour réguler la quantité d'aspiration de gaz de refroidissement chargé, en fonction de la quantité d'amenée du gaz de refroidissement amené au-dessus de la buse annulaire de la tête de soufflage, par l'intermédiaire du premier anneau de gaz de refroidissement (19).

22. Dispositif selon l'une des revendications 12 à 21, et comportant un refroidissement intérieur du film tubulaire, **caractérisé en ce que** la conduite d'aspiration pour le gaz chargé provenant du refroidissement intérieur du film tubulaire, est réunie à la conduite d'aspiration pour le gaz de refroidissement chargé provenant du refroidissement extérieur.

23. Dispositif selon l'une des revendications 12 à 22, **caractérisé en ce qu'**un filtre (45) est agencé dans une conduite d'aspiration de gaz (43), avant un ventilateur d'aspiration (44).

24. Dispositif selon l'une des revendications 12 à 23, **caractérisé en ce qu'**il est prévu un capotage de confinement (53), qui confine l'écoulement du gaz de refroidissement chargé du premier anneau de gaz de refroidissement (19) jusqu'à l'anneau d'aspiration de gaz (25), par rapport à l'environnement.
